Europäisches Patentamt

**European Patent Office**

Office européen des brevets

(11) Publication number: **0 023 749**
**B1**

(12) EUROPEAN PATENT SPECIFICATION

(45) Date of publication of patent specification: **06.07.83**

(51) Int. Cl.³: **C 08 G 18/08,**
**B 29 D 27/00, C 08 G 18/76**

(21) Application number: **80301526.2**

(22) Date of filing: **09.05.80**

(54) Method and apparatus for the manufacture of flexible polyurethane foam articles.

(30) Priority: **02.07.79 GB 7922988**

(43) Date of publication of application:
**11.02.81 Bulletin 81/6**

(45) Publication of the grant of the patent:
**06.07.83 Bulletin 83/27**

(84) Designated Contracting States:
**BE DE FR GB IT NL**

(56) References cited:
**DE - A - 2 613 719**
**DE - A - 2 647 482**

**Patents Abstracts of Japan Vol. 1, No. 84, 6**
**August 1977, Page 1800C77**

(73) Proprietor: **IMPERIAL CHEMICAL INDUSTRIES PLC**
**Imperial Chemical House Millbank**
**London SW1P 3JF (GB)**

(72) Inventor: **Woods, George**
**33 Parsonage Road**
**Withington, Manchester 20 (GB)**

(74) Representative: **Houghton, Malcolm John et al,**
**Imperial Chemical Industries PLC Legal**
**Department: Patents Thames House North**
**Millbank**
**London SW1P 4QG (GB)**

Courier Press, Leamington Spa, England

# Method and apparatus for the manufacture of flexible polyurethane foam articles

This invention relates to the manufacture of flexible polyurethane foam articles.

According to the present invention we provide a method for the manufacture of a flexible polyurethane foam article which comprises introducing into a mould a flexible polyurethane foam-forming mixture, especially such a mixture based on polymeric MDI (as hereinafter defined) and allowing the mixture to foam under a pressure less than normal atmospheric pressure and set. The invention also includes the polyurethane foam article so produced.

The expression "flexible polyurethane foam-forming mixture" is well understood by the skilled worker in the polyurethanes field and methods for the preparation of these mixtures are fully described in the literature. They involve mixing together a polyisocyanate, a polyol and a blowing agent optionally in the presence of other conventional ingredients such as catalysts, surfactants, modifiers, fillers, plasticisers and pigments. When water is used as the blowing agent it reacts with the isocyanate liberating carbon dioxide and forming a urea linkage. The term "polyurethane" will be understood, therefore, to include polymers containing urea as well as urethane groups.

Hitherto tolylene diisocyanate (TDI) has been the preponderantly used isocyanate for flexible polyurethane foam manufacture. While another commercially available polyisocyanate, diphenylmethane diisocyanate (MDI), which is commonly obtained in a "crude" or "polymeric" form, is considerably less volatile and safer to use, it has over-riding chemical and economic disadvantages in flexible foam manufacture. These disadvantages arise from the insolubility and phase separation of the ureas (or biurets) formed from the initial reaction of MDI and water and from the higher molecular weight of MDI which reduces the efficiency of "blowing" the foam by the carbon dioxide generated during the water-isocyanate reaction. There is a greater reacting mass for a given volume of carbon dioxide and more isocyanate to water needs to be used to achieve a given density reduction than in the case of a TDI based reaction. This compounds the ill-effects of the insoluble hard-block formation giving stiff unattractive polymers with low tensile properties and poor recovery from compression.

It is therefore an unexpected advantage of the method of the present invention that MDI can be used to make an acceptable flexible foam, for instance, for general upholstery applications. In particular, we have found that the reduced amount of MDI required in our process to provide sufficient carbon dioxide for "blowing" at reduced pressure enables the production of low cost flexible foams where the required level of polymer cross-linking is obtained by the use of MDI containing a proportion of branched isocyanate. Thus, of special value for use in the present invention are flexible polyurethane foam-forming mixtures based on polymeric MDI.

Polymeric MDI is a mixture of methylene bridged polyphenyl polyisocyanates containing diisocyanates and higher functionality polyisocyanates and is obtainable from the phosgenation of a corresponding mixture of polyamines which in turn is obtained by condensing aniline with formaldehyde.

The constitution of the polymeric MDI will depend *inter alia* on the selected ratio of reactants in the aniline/formaldehyde condensation and may be adjusted by distillation or crystallisation of all or part of the isocyanate mixture followed by back-blending with undistilled material of the distillate, which is optionally further purified and/or partially reacted with a polyol to form an isocyanate-ended prepolymer. Polymeric MDI compositions are more fully described in, for example, our British patents 1444192 and 1450660. The mixture of isocyanates normally contains from 5 to 70% by weight of polyisocyanates of functionality greater than two and usually from 20 to 60% by weight of such polyisocyanates.

We have found the most suitable polymeric MDI compositions to be those containing 50 to 75% by weight of diisocyanate, 10 to 40% by weight of triisocyanate and preferably less than 20% by weight of higher functionality isocyanates.

The diisocyanate component of the MDI composition ideally consists of 50 to 80% by weight of the 4,4'-isomer of MDI with 10 to 50% by weight of the 2,4'-isomer and may also contain up to 3% by weight of the 2,2'-isomer of MDI. The diisocyanate may be partially reacted with a polyol of equivalent weight between 250 and 2000.

Polyols suitable for preparing the foam-forming mixture are well known to the skilled polyurethanes worker. These include polyesters but polyethers are normally used for flexible foams. They may be mixed with the polyisocyanate, blowing agent and other ingredients in one lot to form the foam-forming mixture or part of the polyol may be pre-reacted with the polyisocyanate to form an isocyanate-ended prepolymer which is then mixed with the remainder of the polyol, the blowing agent and other ingredients immediately before the foam-forming mixture so obtained is introduced into the mould.

The polymeric MDI compositions which we have found most suitable are mixed with polyol compositions consisting of polyether diols, triols or tetrols, or mixtures thereof, of equivalent weight between 750 and 2000 containing 0.4 to 4.0% by weight of water and usefully minor amounts of suitable catalysts, structure modifying surfactants and flame retardant additives. These mixtures allow the use of isocyanate indices less than 100, i.e. they allow the use of a stoichometric excess of polyol to give foams of commercially desirable properties. The use of a stoichometric excess of the polyol component results in rapid foam cure and ensures the absence of free volatile isocyanate in the hot freshly made foam on removal from the mould.

If a prepolymer is to be prepared in a two stage reaction the quantities of the MDI composition and polyether are chosen to give an isocyanate-ended prepolymer having an isocyanate value in the range of from 10 to 30% by weight isocyanate. The polyethers used in the first and second stages may differ in molecular weight and functionality.

The pressure under which the foam-forming mixture foams is controlled at less than normal atmospheric pressure and is typically about 0.5 bar. It need not be constant, however, and may vary during the moulding period. The pressure in the mould is reduced normally before any significant foam rise occurs. The optimum pressure profile, i.e. the optimum rate of change of pressure during the moulding period, will depend *inter alia* on the particular foam formulation chosen and will readily be determined by trial. Of necessity the mould will need to be enclosed and connected to a vacuum source. A combination of an evacuated reservoir and vacuum pump will permit rapid removal of air from the mould once the foam-forming ingredients have been introduced and control of the reduced pressure during the foaming process. The capacities of the reservoir and pump will be determined by the size and number of moulds served and on the particular foam-forming mixture used since the rate of gas evolution varies from one foam formulation to another. For example, a MDI based foam tends to evolve more gas than a TDI based foam towards the end of the foam-forming reaction. In a preferred method of the present invention the evacuated reservoir is a second mould of a plurality of moulds which form part of a moulding plant used for the sequential batch manufacture of flexible foam articles.

Thus according to another aspect of this invention we provide a method for moulding is sequence flexible polyurethane foam articles by repeating the cycle of steps which comprises introducing a flexible polyurethane foam-forming mixture into a first mould; connecting the first mould to a second mould which contains therein a previously foamed flexible foam article and which is at less than normal atmospheric pressure thereby to reduce the pressure in the first mould to less than normal atmospheric pressure; continuing to maintain the first mould at less than normal atmospheric pressure during foaming using a secondary pressure reducing source; isolating the second mould from the first, venting the second mould and removing therefrom the previously formed flexible foam article; connecting the first mould to the second mould or to a third mould in which a flexible foam forming mixture has been introduced thereby to reduce the pressure in that second or third mould; and thereafter isolating the first mould from that second or third mould, venting the first mould and removing the moulded article therefrom.

Such a process finds particular application in the discontinuous manufacture of flexible slabstock, that is blocks of foam typically measuring $2 \times 1 \times 1 \ m^3$.

By enabling MDI-based flexible foams to be produced, the method of the invention obviates the high velocity and high volume (e.g. 707.5 $m^3$ (25,000 $ft^3$)/min) air extraction systems associated with present TDI based slabstock plants as the gaseous effluent from the closed moulds may be exhausted via a rotary suction pump and a simple low capacity absorbent column or scrubbing device without hazard to the operators or contamination of the environment. The use of MDI instead of TDI reduces the volatile isocyanate vapour by a factor of about 500 and the high reactivity of most of the isocyanate groups in the preferred MDI compositions compared with TDI results in extremely low levels of unreacted isocyanate remaining in the hot foam immediately after demoulding. Further, the use of a polymeric or modified polymeric MDI composition with significant triisocyanate content enables the production of sufficiently cross-linked polymers at low levels of polyisocyanate and water.

In a further aspect of our invention we provide moulding apparatus for making a flexible foam article which comprises an enclosed sectional mould which has an inlet for the reception of a foam-forming mixture and which is connected to a device for exhausting air or other gas or vapour from the mould, said device being controllable to maintain the pressure in the mould at less than normal atmospheric pressure and on a predetermined pressure profile.

By sectional mould we mean a mould constituted by a plurality of sections or parts which can be clamped, interlocked or otherwise held firmly together during the moulding process, the mould being opened or dismembered into its component sections or parts to release the moulded article. It is desirable that the sections or parts should be sealable in gas-tight manner to enable precise control and collection of all vapours generated during the foaming reaction and to minimise the use of carbon dioxide blowing to reduce the volume and temperature of the gases produced. In addition the use of vacuum sealed moulds and integral mixing heads removes any hazard from isocyanate vapour as well as reducing the amount of isocyanate required for the blowing reaction.

The device for exhausting gas or vapour from the mould may be a vacuum pump or other pressure reducing source but preferably it comprises a reservoir which can be held at less than atmospheric pressure to provide a means for rapid exhaustion of the mould and additionally a vacuum pump for maintaining the pressure in the mould on the predetermined pressure profile. Conveniently the reservoir is a second mould, the moulds being part of a moulding plant for the sequential manufacture of flexible foam articles.

Thus according to yet a further aspect of our invention we provide a moulding plant for making in sequence flexible foam articles which comprises a plurality of moulds, each mould having an inlet for the reception of a flexible foam-forming mixture, a vent and an outlet for the exhaustion of air or other gas or vapour from the mould, the outlet being connected through a valve arrangement to a second mould, which itself can be exhausted of gas or vapour, and to a secondary pressure reducing source.

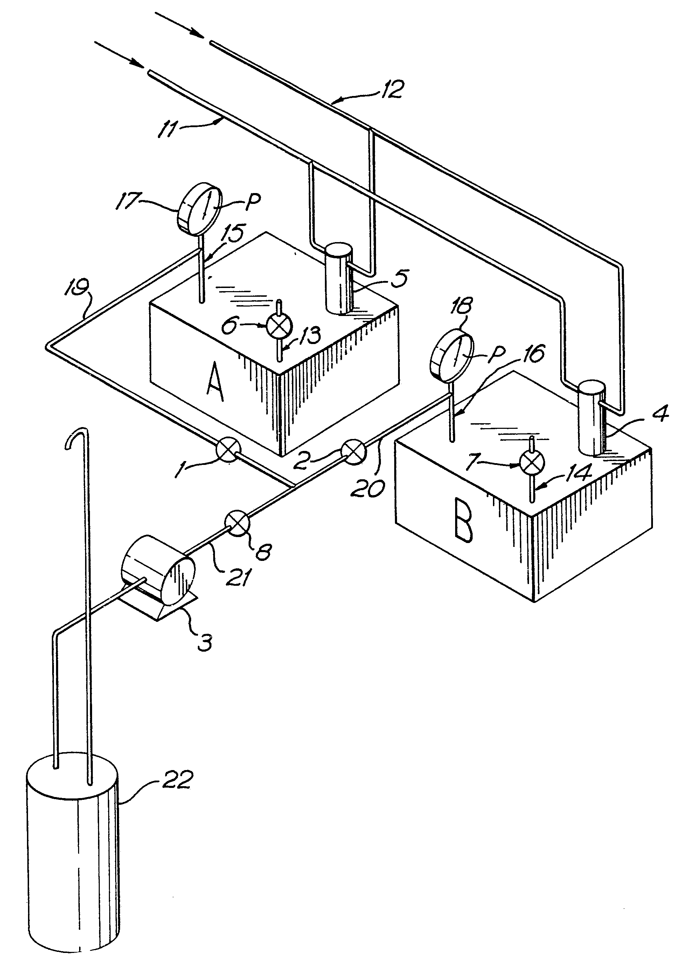

By way of example only, the method and apparatus of the invention will now be described in relation to one embodiment with reference to the accompanying drawing which is schematic isometric diagram of part of a flexible foam moulding plant.

In the drawing, enclosed sectional moulds A and B have integral mixing heads 5 and 4, respectively, which are connected to foam ingredient lines 11 and 12, vents 13 and 14 controlled by valves 6 and 7, and outlets 15 and 16 to which pressure gauges 17 and 18 are attached. Moulds A and B and a rotary vacuum pump 3, which is served by a scrubber 22, are interconnected via outlets 15 and 16 by lines 19, 20 and 21, the moulds being isolatable from each other and from vacuum pump 3 by valves 1, 2 and 8.

In operation, with all valves intially shut and the vacuum pump running, valves 1 and 8 are opened to connect mould A to vacuum pump 3 and the pressure in A is reduced to a predetermined value which, in this example, is 0.5 bar. A polymeric MDI composition and polyol blend are metered to mixing head 4 and dispensed as a foam-forming mixture into mould B. As soon as the mixture has been dispensed (in 1 to 20 seconds), valve 2 is opened to connect mould B with mould A and with vacuum pump 3 to obtain a rapid reduction in the pressure in mould B to a predetermined value. Precise control of the rate of pressure drop and its final value are obtained by control of valves 1, 2 and 8 using electrical operation monitored and controlled by an electronic microprocessor which keys also the operation of the foam injection system. On completion of foaming, mould B, now full of reacted foam under reduced pressure, is isolated by valve 1 from mould A which is allowed to reach atmospheric pressure via valve 6. Foam mix is admitted to mould A and the pressure reduced to a predetermined value by closing valve 6 and operating valves 1, 2 and 8 to an extent determined by monitoring the pressure in mould A. At the end of this cycle air is admitted to mould B via vent 14, the mould is opened and the slab of foam, now substantially free from volatile materials is removed and transferred to a cooling and storage room.

The system may be enlarged by the addition of further moulds. This not only increases production capacity but, by connecting several moulds by suitably controlled valve and piping arrangements, rapid and controlled pressure reductions may be obtained in the mould during foaming without the need for very high capacity vacuum pumps and high levels of contaminated exhaust gas.

**Claims**

1. A method for the manufacture of a flexible polyurethane foam article which comprises introducing into a mould a flexible polyurethane foam-forming mixture and allowing the mixture to foam under a pressure less than normal atmospheric pressure and set.

2. A method as claimed in claim 1 in which the flexible polyurethane foam-forming mixture is based on polymeric MDI which is a mixture of methylene bridged polyphenyl polyisocyanates containing diisocyanates and higher functionality polyisocyanates.

3. A method as claimed in claim 2 in which the polymeric MDI is a composition containing 50 to 75% by weight of diisocyanate, 10 to 40% by weight of triisocyanate and less than 20% by weight of higher functionality isocyanates.

4. A method as claimed in claims 2 or 3 in which the diisocyanate component of the polymeric MDI consists of 50 to 80% by weight of the 4,4'-isomer of diphenylmethane diisocyanate, 10 to 50% by weight of the 2,4'-isomer and up to 3% by weight of the 2,2'-isomer.

5. A method as claimed in any one of claims 2 to 4 in which the flexible foam-forming mixture is obtained by mixing the polymeric MDI with a polyol composition consisting of a polyether diol, triol or tetrol, or mixture thereof, of equivalent weight between 750 and 2000 and containing 0.4 to 4.0% by weight of water.

6. A method as claimed in any one of the preceding claims in which the pressure under which the foam-forming mixture is allowed to foam is about 0.5 bar.

7. A method for moulding in sequence flexible polyurethane foam articles by repeating the cycle of steps which comprises introducing a flexible polyurethane foam-forming mixture into a first mould; connecting the first mould to a second mould which contains therein a previously foamed flexible foam article and which is at less than normal atmospheric pressure thereby to reduce the pressure in the first mould to less than normal atmospheric pressure; continuing to maintain the first mould at less than normal atmospheric pressure during foaming using a secondary pressure reducing source; isolating the second mould from the first, venting the second mould and removing therefrom the previously formed flexible foam article; connecting the first mould to the second mould or to a third mould in which a flexible foam forming mixture has been introduced thereby to reduce the pressure in that second or third mould; and thereafter isolating the first mould from that second or third mould, venting the first mould and removing the moulded article therefrom.

8. Moulding apparataus for making a flexible foam article which comprises an enclosed sectional mould which has an inlet for the reception of a foam-forming mixture and which is connected to a device for exhausting air or other gas or vapour from the mould, said device being controllable to maintain the pressure in the mould at less than normal atmospheric pressure and on a predetermined pressure profile.

9. Apparatus as claimed in claim 8 in which the device for exhausting gas or vapour from the mould comprises a reservoir which can be held at less than atmospheric pressure to provide a means for rapid exhaustion of the mould and additionally a vacuum pump for maintaining the pressure in the mould on the predetermined pressure profile.

10. A moulding plant for making in sequence flexible foam articles which comprises a plurality of moulds, each mould having an inlet for the reception of a flexible foam-forming mixture, a vent and an outlet for the exhaustion of air or other gas or vapour from the mould, the outlet being connected through a valve arrangement to a second mould, which itself can be exhausted of gas or vapour, and to a secondary pressure reducing source.

**Revendications**

1. Procédé de préparation d'un article en mousse de polyuréthane flexible, qui comprend l'introduction, dans un moule, d'un mélange formant une mousse de polyuréthane flexible et l'acte de laisser le mélange mousser sous une pression inférieure à la pression atmosphérique normale et faire prise.

2. Procédé suivant la revendication 1, dans lequel le mélange formant la mousse de polyuréthane flexible est à base de MDI polymère qui est un mélange de polyphényl-polyisocyanates à ponts méthyléniques contenant des diisocyanates et des polyisocyanates d'une fonctionnalité supérieure.

3. Procédé suivant la revendication 2, dans lequel le MDI polymère est une composition contenant 50 à 75% en poids de diisocyanate, 10 à 40% en poids de triisocyanate et moins de 20% en poids d'isocyanates d'une fonctionnalité supérieure.

4. Procédé suivant la revendication 2 ou 3, dans lequel le composant diisocyanate du MDI polymère consiste en 50 à 80% en poids de l'isomère 4,4' du diisocyanatodiphénylméthane, 10 à 50% en poids de l'isomère 2,4' et jusqu'à 3% en poids de l'isomère 2,2'.

5. Procédé suivant l'une quelconque des revendications 2 à 4, dans lequel le mélange formant la mousse flexible est obtenu par mélange du MDI polymère avec une composition de polyol consistant en un polyéther diol, triol ou tétrol ou en un mélange de ceux-ci, d'un piods équivalent entre 750 et 2.000 et contenant 0,4 à 4,0% en poids d'eau.

6. Procédé suivant l'une quelconque des revendications précédentes, dans lequel la pression sous laquelle le mélange formant la mousse est mis à mousser est d'environ 0,5 bar.

7. Procédé pour mouler en succession des articles en mousse de polyuréthane flexible par répétition du cycle d'opérations qui comprend l'introduction, dans un premier moule, d'un mélange formant une mousse de polyuréthane flexible, le raccordement du premier moule à un deuxième moule qui contient un article en mousse flexible déjà expansé et qui se trouve au-dessous de la pression atmosphérique normale de manière à abaisser la pression dans le premier moule jusqu'au-dessous de la pression atmosphérique normale; la poursuite du maintien du premier moule au-dessous de la pression atmosphérique normale pendant l'expansion au moyen d'une source secondaire de réduction de la pression; l'isolement du deuxième moule par rapport au premier, la mise à l'air libre du deuxième moule et le retrait hors de celui-ci de l'article en mousse flexible antérieurement formé; le raccordement du premier moule au deuxième moule ou à un troisième moule dans lequel un mélange formant une mousse flexible a été introduit de manière à abaisser la pression dans ce deuxième ou troisième moule; et ensuite l'isolement du premier moule par rapport à ce deuxième ou troisième moule, la mise à l'air libre du premier moule et le retrait hors de celui-ci de l'article moulé.

8. Appareil de moulage pour la préparation d'un article en mousse flexible, qui comprend un moule à sections fermé qui comporte une entrée pour recevoir un mélange formant la mousse et qui est raccordé à un dispositif pour évacuer l'air ou un autre gaz ou vapeur hors du moule, ce dispositif étant réglable pour maintenir la pression dans le moule au-dessous de la pression atmosphérique normale et à un profil de pression déterminé au préalable.

9. Appareil suivant la revendication 8, dans lequel le dispositif pour évacuer le gaz ou la vapeur hors du moule comprend un réservoir qui peut être maintenu au-dessous de la pression atmosphérique pour procurer un moyen pour l'évacuation rapide du moule et en outre une pompe à vide pour le maintien de la pression dans le moule au profil de pression déterminé au préalable.

10. Installation de moulage pour la préparation en succession d'articles en mousse flexible qui comprend plusieurs moules, chaque moule comprenant une entrée pour recevoir un mélange formant une mousse flexible, un évent et une sortie pour l'évacuation de l'air ou d'un autre gaz ou vapeur hors du moule, la sortie étant raccordée par une robinetterie à un second moule hors duquel le gaz ou la vapeur peut être évacué, et à une source secondaire de réduction de la pression.

## Patentansprüche

1. Verfahren zur Herstellung eines Gegenstands aus einem flexiblen Polyurethanschaum, bei welchem in eine Form ein einen flexiblen Polyurethanschaum bildendes Gemisch eingeführt wird und das Gemisch bei einem kleineren als dem normalen Atmosphärendruck schäumen und abbinden gelassen wird.

2. Verfahren nach Anspruch 1, bei welchem das einen flexiblen Polyurethanschaum bildende Gemisch auf polymerem MDI basiert, welches ein Gemisch aus Methylenbrücken aufweisenden Polyphenylpolyisocyanaten, das Diisocyanate und höherfunktionelle Polyisocyanate enthält, darstellt.

3. Verfahren nach Anspruch 2, bei welchem das polymere MDI eine Zusammensetzung darstellt, die 50 bis 75 Gew.-% Diisocyanat, 10 bis 40 Gew.-% Triisocyanat und weniger als 20 Gew.-% höherfunktionelle Isocyanate enthält.

4. Verfahren nach Anspruch 2 oder 3, bei welchem die Diisocyanatkomponente des polymeren MDI aus 50 bis 80 Gew.-% des 4,4'-Isomers von Diphenylmethandiisocyanat, 10 bis 50 Gew.-% des 2,4'-Isomers und bis zu 3 Gew.-% des 2,2'-Isomers besteht.

5. Verfahren nach einem der Ansprüche 2 bis 4, bei welchem das einen flexiblen Schaum bildende Gemisch dadurch hergestellt wird, daß das polymere MDI mit einer Polyolzusammensetzung gemischt wird, die aus einem Polyätherdiol, -triol oder -tetrol oder einem Gemisch davon besteht, ein Äquivalentgewicht zwischen 750 und 2000 aufweist und 0,4 bis 4,0 Gew.-% Wasser enthält.

6. Verfahren nach einem der vorhergehenden Ansprüche, bei welchem der Druck, unter welchem das schaumbildende Gemisch schäumen gelassen wird, ungefähr 0,5 bar beträgt. trägt.

7. Verfahren zum aufeinanderfolgenden Ausformen von Gegenständen aus einem flexiblen Polyurethanschaum durch Wiederholung des folgenden Zyklusses von Stufen: Einführen eines einen flexiblen Polyurethanschaum bildenden Gemischs in eine erste Form; Verbinden der ersten Form mit einer zweiten Form, welche einen vorher geschäumten flexiblen Schaumgegenstand enthält und welche einen kleineren als den normalen Atmosphärendruck aufweist, um den Druck in der ersten Form auf einen kleineren als den normalen Atmosphärendruck zu verringern; weiteres Halten der ersten Form auf einem kleineren als dem normalen Atmosphärendruck während des Schäumens unter Verwendung einer zweiten Druckverringerungseinrichtung; Trennen der zweiten Form von der ersten, Belüften der zweiten Form und Entfernen des vorher hergestellten flexiblen Schaumgegenstands; Verbinden der ersten Form mit der zweiten Form oder einer dritten Form, in welche ein einen flexiblen Schaum bildendes Gemisch eingeführt worden ist, wodurch der Druck in dieser zweiten oder dritten Form verringert wird; und schließlich Trennen der ersten Form von der zweiten oder dritten Form, Belüften der ersten Form und Entfernen des Formgegenstands daraus.

8. Formvorrichtung zur Herstellung eines flexiblen Schaumgegenstands, welche eine eingeschlossene teilbare Form besitzt, die einen Einlaß für das Einbringen eines schaumbildenden Gemischs aufweist und die mit einer Einrichtung zum Abzug von Luft oder eines anderen Gases oder von Dampf aus der Form verbunden ist, wobei diese Einrichtung so steuerbar ist, daß in der Form ein kleinerer als der normale Atmosphärendruck und ein vorbestimmtes Druckprofil aufrechterhalten werden kann.

9. Vorrichtung nach Anspruch 8, in welcher die Einrichtung zum Abziehen von Gas oder Dampf aus der Form ein Reservoir, welches auf einem kleineren als dem Atmosphärendruck gehalten werden kann und somit eine rasche Evakuierung der Form ermöglicht, und weiterhin eine Vakuumpumpe, mit der der Druck in der Form auf dem vorbestimmten Druckprofil gehalten werden kann, aufweist.

10. Anlage zum aufeinanderfolgenden Ausformen von flexiblen Schaumgegenständen, welche mehrere Formen aufweist, wobei jede Form einen Einlaß zum Einbringen eines einen flexiblen Schaum bildenden Gemischs, eine Entlüftung und einen Auslaß zum Abziehen von Luft oder eines anderen Gases oder von Dampf aus der Form aufweist, wobei der Auslaß über eine Ventilanordnung mit einer zweiten Form, aus der selbst Gas oder Dampf abgezogen werden kann, und mit einer zweiten Druckverringerungseinrichtung verbunden ist.

0 023 749

1